# EUROPEAN PATENT APPLICATION

(11) **EP 3 199 287 A1**
(43) Date of publication of application: **02.08.2017**
(21) Application number: 15845350.6
(22) Date of filing: 18.09.2015
(51) Int. Cl.: B23K 9/00, B23K 9/028, B23K 9/08, B23K 9/20, B23K 37/08

(54) **BONDED BODY, MAGNETIC ROTATING ARC BONDING METHOD, AND METHOD FOR MANUFACTURING BONDED BODY**

(30) Priority: 25.09.2014 JP 2014195213; 25.09.2014 JP 2014195258
(71) Applicant: NTN Corporation, Osaka-shi, Osaka 550-0003 (JP)
(72) Inventor: MIZUTA, Kohei, Kuwana-shi Mie 511-0867 (JP); OHKI, Chikara, Kuwana-shi Mie 511-0867 (JP); SATO, Daisuke, Kuwana-shi Mie 511-0867 (JP)
(74) Representative: Bockhorni & Kollegen
(86) International application number: PCT/JP2015/076747
(87) International publication number: WO 2016/047619

(57) **Abstract**

Provided are a magnetic rotating arc joining method that can suppress occurrence of joint defects with a simple configuration and a joint unit in which joint defects are suppressed. A joint unit (10) includes a first metal pipe (21), a second metal pipe (22), and a joint portion (a region including a joint interface (11)) at which the end faces of the first and second metal pipes are joined to each other. At the joint portion, an outer circumferential bead portion protruding toward the outer circumference side and an inner circumferential bead portion (13) protruding toward the inner circumference side are formed. The difference between the width of the outer circumferential bead portion (the width L1 of a grinding portion (12)) and the width L2 of the inner circumferential bead portion (13) in a direction from the first metal pipe (21) toward the second metal pipe (22) is equal to or smaller than 40% with respect to the average value of the width L1 of the outer circumferential bead portion and the width L2 of the inner circumferential bead portion (13).

## Description

### TECHNICAL FIELD

This invention relates to a joint unit, a magnetic rotating arc joining method, and a method of manufacturing a joint unit, and more particularly to a joint unit of metal pipes, a magnetic rotating arc joining method, and a method of manufacturing a joint unit.

### BACKGROUND ART

A magnetic rotating arc joining method is conventionally known (for example, see Japanese Patent Laying-Open No. 6-55267).

### CITATION LIST

### PATENT DOCUMENT

PTD 1: Japanese Patent Laying-Open No. 6-55267

### SUMMARY OF INVENTION

### TECHNICAL PROBLEM

In the aforementioned magnetic rotating arc joining method, the essential condition in pressure welding is that steel pipe end faces should be uniformly fused by an arc. Unfortunately, in the conventional magnetic rotating arc joining method, particularly when the pipes have a large diameter or the pipes are thick-walled, the fused state of the steel pipe end faces may not be uniform, sometimes causing joint defects.

In order to prevent such joint defects, the aforementioned Japanese Patent Laying-Open No. 6-55267 discloses a method in which the outer periphery of the end faces (joint portion) of pipes disposed to be opposed to each other is surrounded by heating means such as a gas burner, and the joint portion is heated with the heating means in advance before an arc is initiated. The provision of such heating means, however, complicates the structure of the joining apparatus and increases the cost of the joining method.

This invention is made in order to solve the problem as described above. An object of this invention is to provide a magnetic rotating arc joining method that can suppress the occurrence of joint defects with a simple configuration, a joint unit in which the occurrence of joint defects is suppressed, and a method of manufacturing the same.

In the aforementioned magnetic rotating arc joining method, the end faces of two steel pipes to be joined by an arc are uniformly used, at which timing one of the steel pipes is pressure-welded to the other steel pipe, whereby the steel pipes are joined to each other to obtain a joint unit. In this case, the fused layer in the end faces to be joined is supercooled to generate a dendritic structure at the joint interface. This dendritic structure has strength weaker than the regions (for example, the base metal and the heat-affected zone of the steel pipe) other than the vicinity of the joint interface of the steel pipes and may cause defects such as cracks. As a result, the strength of the joint portion including the joint interface in the joint unit is insufficient.

This invention is made in order to solve the problem as described above. An object of this invention is to obtain a magnetic rotating arc joining method by which a joint portion with sufficient strength can be formed in a joint unit, a joint unit including a joint portion with sufficient strength, and a method of manufacturing the same.

### SOLUTION TO PROBLEM

A joint unit according to an embodiment of this invention includes a first metal pipe, a second metal pipe, and a joint portion at which the end faces of the first and second metal pipes are joined to each other. At the joint portion, an outer circumferential bead portion protruding toward the outer circumference side and an inner circumferential bead portion protruding toward the inner circumference side are formed. The difference between the width of the outer circumferential bead portion and the width of the inner circumferential bead portion in a direction from the first metal pipe toward the second metal pipe is equal to or smaller than 40% with respect to the average value of the width of the outer circumferential bead portion and the width of the inner circumferential bead portion.

A magnetic rotating arc joining method according to an embodiment of the present invention includes the step of preparing first and second metal pipes, the step of preheating, the step of main heating, and the step of joining. In the step of preheating, preheating is performed until the temperature at a position 2 mm away from the end faces of the first and second metal pipes reaches a preheating temperature, by producing an arc discharge between the end faces of the first and second metal pipes in a state in which the end faces are disposed to be opposed to each other, and applying a magnetic field between the end faces to move the position of the arc discharge in between the end faces. In the step of main heating, main heating is performed until the temperature at the position 2 mm away from the end faces of the first and second metal pipes reaches a joining temperature, by producing an arc discharge between the end faces of the first and second metal pipes and applying a magnetic field between the end faces to move the position of the arc discharge in between the end faces. In the step of joining, the end faces are butted and joined to each other, after the step of main heating.

A joint unit according to an embodiment of the present invention includes a first metal pipe, a second metal pipe, and a joint portion at which end faces of the first and second metal pipes are joined to each other. At a joint interface between the first metal pipe and the second metal pipe in the joint portion, a dendrite layer does not exist in a region inside the outer circumferential surfaces of the first and second metal pipes and outside the inner circumferential surfaces of the first and second metal pipes.

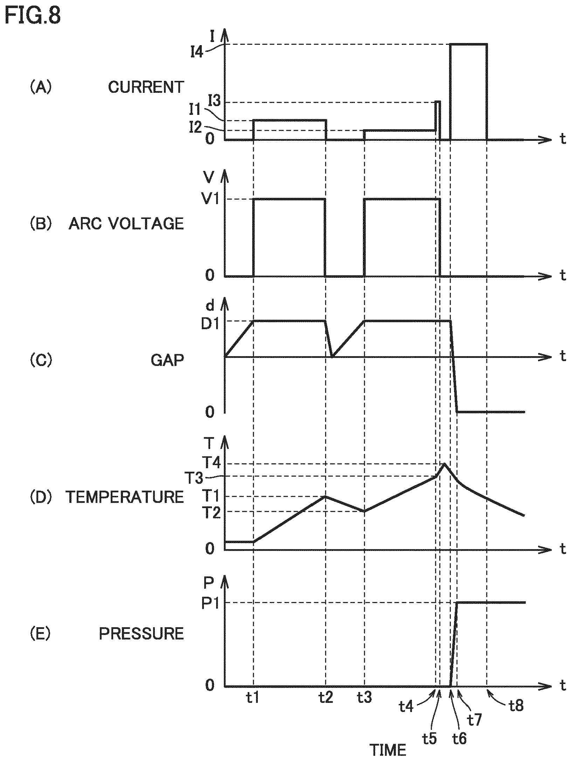

A magnetic rotating arc joining method according to an embodiment of this invention includes the step of preparing first and second metal pipes 21 and 22 (S10), the step of main heating (S30), and the step of joining (S40). In the step of main heating (S30), an arc discharge is produced between the end faces of first and second metal pipes 21 and 22, and a magnetic field is applied between the end faces to move the position of the arc discharge in between the end faces, whereby main heating is performed until the temperature at a position 2 mm away from the end faces of first and second metal pipes 21 and 22 reaches a joining temperature (temperature T3 in Fig. 8(D)). In the step of joining (S40), the end faces are butted and joined to each other after the step of main heating (S30). In the step of joining (S40), the relative pressure welding speed of first metal pipe 21 to second metal pipe 22 in butting the end faces to each other is 20 mm/s or more.

A method of manufacturing a joint unit according to an embodiment of the present invention uses the magnetic rotating arc joining method described above. In this way, joint unit 10 including a joint portion with sufficient strength can be obtained.

### ADVANTAGEOUS EFFECTS OF INVENTION

According to the foregoing, a joint unit can be obtained in which the occurrence of joint defects is suppressed. In addition, according to the foregoing, a joint unit including a joint portion with sufficient strength can be obtained.

### BRIEF DESCRIPTION OF DRAWINGS

Fig. 1 is a perspective diagram of a joint unit according to the present embodiment.
Fig. 2 is a cross-sectional diagram taken along line II-II in Fig. 1.
Fig. 3 is a diagram illustrating a magnetic rotating arc joining method according to the present embodiment.
Fig. 4 is a cross-sectional diagram of a joint unit in Comparative Example.
Fig. 5 is a cross-sectional diagram of the joint unit according to the present embodiment.
Fig. 6 is a flowchart illustrating the magnetic rotating arc joining method according to the present embodiment.
Fig. 7 is a diagram showing an example of the joining apparatus for performing the magnetic rotating arc joining method according to the present embodiment.
Fig. 8 is a timing chart illustrating the magnetic rotating arc joining method according to the present embodiment.
Fig. 9 shows a photograph of a sample of the joint unit to which the magnetic rotating arc joining method according to the present embodiment is applied.
Fig. 10 shows structure photographs of the sample shown in Fig. 9.
Fig. 11 shows a photograph of a sample of the joint unit in Comparative Example.
Fig. 12 shows structure photographs of the sample shown in Fig. 11.

### DESCRIPTION OF EMBODIMENTS

Embodiments of the present invention will be described below in conjunction with the drawings. It is noted that the in the drawings described below the same or corresponding parts are denoted with the same reference signs and a description thereof will not be repeated.

### <Configuration of Joint Unit>

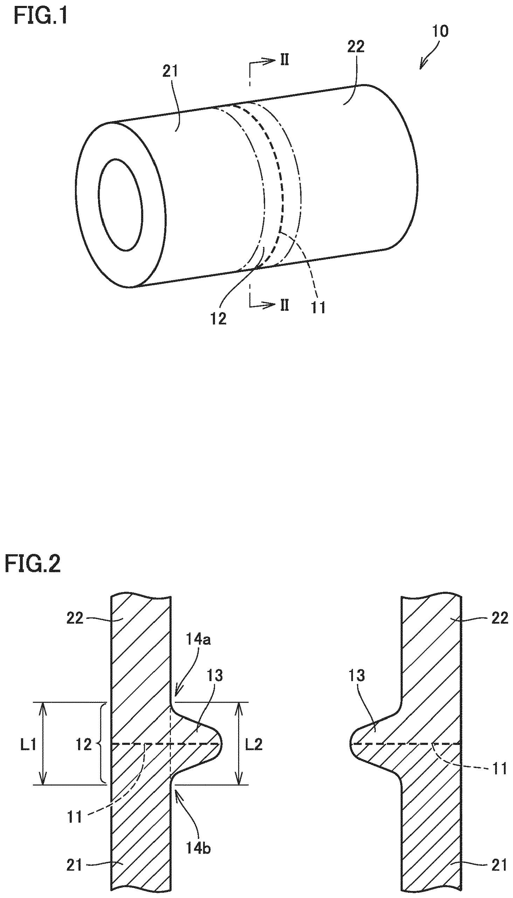

Referring to Fig. 1 and Fig. 2, a joint unit according to the present embodiment will be described. Referring to Fig. 1, a joint unit 10 is formed by joining a first metal pipe 21 and a second metal pipe 22 by a magnetic rotating arc joining method. That is, joint unit 10 includes first metal pipe 21, second metal pipe 22, and a joint portion including a joint interface 11 at which end faces of first and second metal pipes 21 and 22 are joined to each other. At the joint portion, an outer circumferential bead portion (not shown) protruding toward the outer circumference side and an inner circumferential bead portion 13 protruding toward the inner circumference side are formed. The outer circumferential bead portion is removed by grinding. The portion where the outer circumferential bead portion is removed by grinding is shown as a grinding portion 12. At joint interface 11 of the joint portion, a dendrite layer 15 does not exist in a region inside the outer circumferential surfaces of first and second metal pipes 21 and 22 and outside the inner circumferential surfaces of first and second metal pipes 21 and 22. In this manner, since dendrite layer 15 does not exist in the vicinity of the central portion in the thickness direction of first and second metal pipes 21 and 22, the strength of the joint portion can be sufficiently increased.

As shown in Fig. 2, in joint unit 10, the difference (the absolute value of L1-L2) between the width of the outer circumferential bead portion (that is, the width L1 of grinding portion 12) and the width L2 of inner circumferential bead portion 13 in the direction from first metal pipe 21 toward second metal pipe 22 is equal to or smaller than 40% with respect to the average value ((L1+L2)/2) of the width of the outer circumferential bead portion (the width L1 of grinding portion 12) and width L2 of the inner circumferential bead portion. In this way, the difference in width of the bead portion is sufficiently small between the inner circumference side and the outer circumference side of first and second metal pipes 21 and 22 at the joint portion, and there is no significant difference in the joint state of the joint portion between the inner circumference side and the outer circumference side. The soundness of the joint portion is thus ensured in joint unit 10.

Here, the width L2 of inner circumferential bead portion 13 is the distance between the positions (boundary points 14a and 14b) where inner circumferential bead portion 13 starts protruding from the inner circumferential surfaces of first metal pipe 21 and second metal pipe 22 at joint unit 10, in the cross section shown in Fig. 2. Similarly, the width L1 of grinding portion 12 on the outer circumference side corresponds to the distance between the positions where the outer circumferential bead portion starts protruding from the outer circumferential surfaces of first metal pipe 21 and second metal pipe 22.

In joint unit 10 described above, the material of joint unit 10 may be any metal material. For example, carbon steel for mechanical structures can be used. In joint unit 10 described above, first and second metal pipes 21 and 22 each have an outer diameter of 10 mm or more and 250 mm or less. The lower limit of the outer diameter is, for example, 20 mm or more, preferably 50 mm or more, more preferably 100 mm or more. First and second metal pipes 21 and 22 each have a wall thickness of 1 mm or more and 16 mm or less. The lower limit of the wall thickness is, for example, 2 mm or more, preferably 5 mm or more, more preferably 10 mm or more.

### <Overview of Magnetic Rotating Arc Joining Method in Present Embodiment>

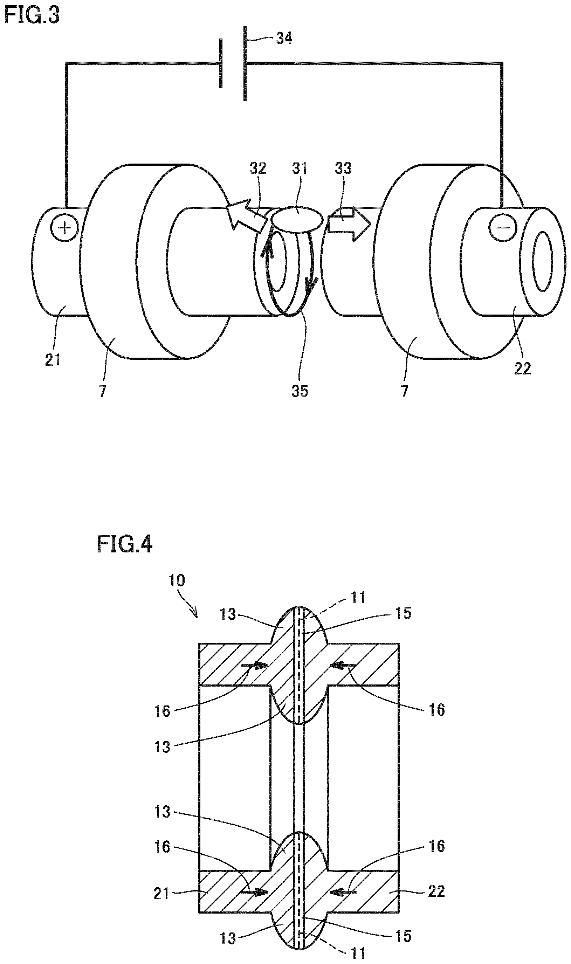

Referring to Fig. 3 to Fig. 5, an overview of the magnetic rotating arc joining method for forming the joint unit shown in Fig. 1 and Fig. 2 will be described.

In the magnetic rotating arc joining method, Fleming's left hand rule is used. In the magnetic rotating arc joining method according to the present embodiment, as shown in Fig. 3, an annular permanent magnet 7 is disposed so as to partially surround the outer circumferential surfaces of first and second metal pipes 21 and 22 disposed with their end faces opposed to each other to apply a magnetic field, and a large direct current is concurrently fed to first and second metal pipes 21 and 22 from a power supply 34. Then, with the distance between the opposed end faces of first and second metal pipes 21 and 22 kept at a constant value, an arc 31 of 1.5 mm to 2.0 mm is initiated between the end faces. In Fig. 3, arrow 33 shows the direction of current, and arrow 32 shows the direction of force acting on arc 31. More specifically, the produced arc 31 receives a rotating magnetic field produced by permanent magnet 7 to rotate fast in the circumferential direction of the end face, as shown by arrow 35 in Fig. 3. As a result, the end faces of first and second metal pipes 21 and 22 are heated.

Here, at the early stage after arc initiation, arc 31 rotates on the inner diameter side of first and second metal pipes 21 and 22 to heat the inner diameter side of the end faces. This is because arc 31 receives force in the inner diameter side direction due to a magnetic blow phenomenon caused by the difference in magnetic flux density between inside and outside in first and second metal pipes 21 and 22. In the present embodiment, as will be described later, heating by an arc is used to perform a preheating step and a main heating step. In the preheating step, the preheating temperature is set equal to or lower than the magnetic transformation point, and the heating temperature in the main heating step is set to, for example, about 1100°C.

In the main heating step, after heating by arc 31 is started, the magnetic susceptibility decreases with temperature increase at the end faces of metal pipes 21 and 22, and ferromagnetism disappears at the magnetic transformation point (770°C). Therefore, the magnetic flux density on the inner diameter side is higher than the magnetic flux density on the outer diameter side of metal pipes 21 and 22, and arc 31 moves toward and heats the outer diameter side of metal pipes 21 and 22 due to the magnetic blow phenomenon.

In the present embodiment, since the end faces of first and second metal pipes 21 and 22 are heated sufficiently in advance in the preheating step, the end faces reach a fused state almost uniformly through the main heating step. This suppresses such a problem that the temperature of the inner diameter end faces exceeds the melting point during heating of the outer diameter end faces of metal pipes 21 and 22, and arc 31 disappears although the heating of the outer diameter end faces is yet insufficient. Then, one of the metal pipes (for example, first metal pipe 21) is pressure-welded to the other metal pipe (for example, second metal pipe 22) fast at the timing when the end faces of first and second metal pipes 21 and 22 are fused almost uniformly, whereby the end faces of first and second metal pipes 21 and 22 are joined. Here, since the fused state is almost uniform from the outer circumference side to the inner circumference side of the end faces, the width of the bead portion on the inner circumference side is almost equal to that on the outer circumference side, resulting in a uniform and satisfactory joint portion.

The inventors have succeeded in forming a joint interface free from a dendrite layer by setting a moving speed (which may be referred to as pressing speed or pressure welding speed) and a pressure welding force to a value equal to or greater than a certain value in pressure-welding one metal pipe to the other metal pipe during the aforementioned pressure welding thereby to push out a dendritic structure from the central portion of the joint interface (a region of the joint interface that overlaps a portion not deformed by joining of first and second metal pipes 21 and 22 as viewed from the axial direction of the joint unit to be formed). In order to form such a joint interface, the fused condition of the end faces, the moving speed, and the pressure welding force are important control parameters. The moving speed is, for example, 20 mm/s or more, and the pressure welding force is, for example, 5 MPa or more.

Here, according to the conventional pressure welding method, as shown in Fig. 4, dendrite layer 15 is formed in joint interface 11. The presence of such dendrite layer 15 may cause reduction in strength of joint interface 11. The reason why such dendrite layer 15 is formed is that the moving speed and/or the pressure welding force in pressing the end faces of first and second metal pipes 21 and 22 against each other in the direction shown by arrows 16 is insufficient for removing dendrite layer 15 to the outside.

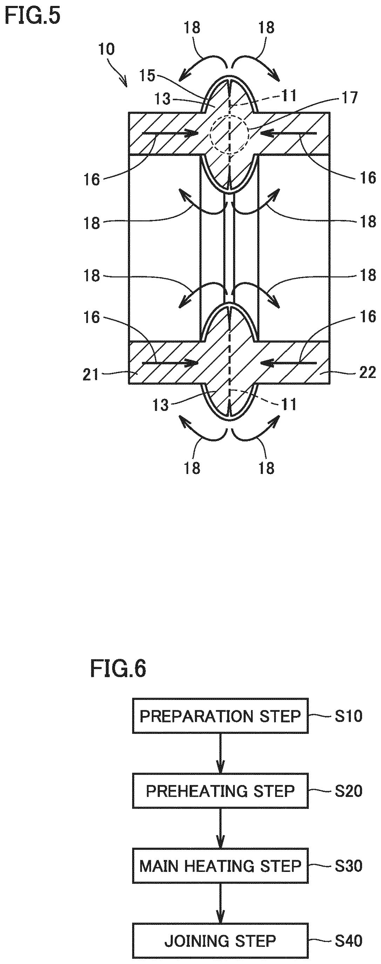

The inventors of the present invention then have succeeded in pushing out dendrite layer 15 formed during joining to the outside (the inner circumference side and the outer circumference side) of joint interface 11 as shown by arrow 18, as shown in Fig. 5, by setting the moving speed and/or the pressure welding force to a high value as described above. As a result, a region 17 including the central portion of joint interface 11 is free from dendrite layer 15. For this reason, in joint unit 10 according to the present embodiment shown in Fig. 5, the strength of the joint portion can be sufficiently increased.

After the process as described above is performed, bead portion 13 (see Fig. 5) positioned on the outer circumference side is removed by grinding to obtain joint unit 10 as shown in Fig. 1 and Fig. 2.

### <Description of Magnetic Rotating Arc Joining Method in Present Embodiment and Method of Manufacturing Joint Unit>

Referring now to Fig. 6 to Fig. 8, the magnetic rotating arc joining method according to the present embodiment and a method of manufacturing a joint unit using the magnetic rotating arc joining method will be described in details below. The vertical axis in Fig. 8(A) shows energizing current between the end faces. The vertical axis in Fig. 8(B) shows arc voltage between the end faces. The vertical axis in Fig. 8(C) shows the distance (gap) between the end faces. The vertical axis in Fig. 8(D) shows the temperature at a position 2 mm away from the end face. The vertical axis in Fig. 8(E) shows the pressing pressure between the end faces. The horizontal axis in Figs. 8(A) to (E) shows the time.

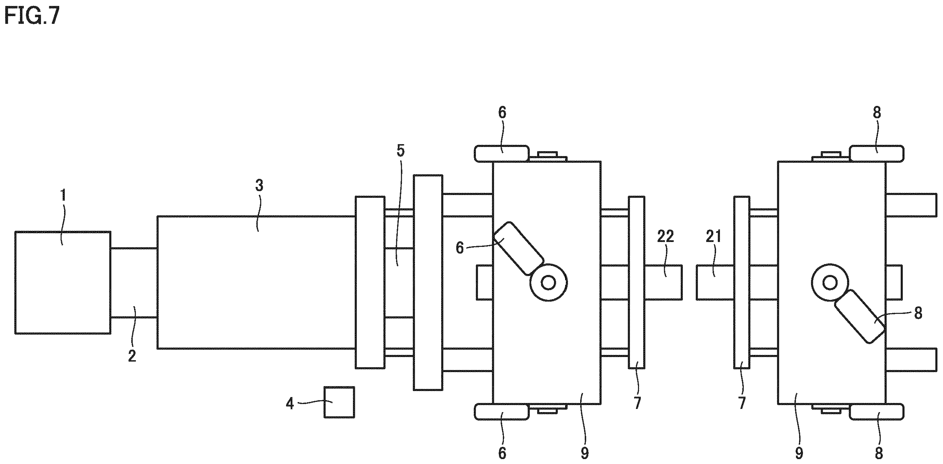

Referring to Fig. 6, in the magnetic rotating arc joining method according to the present embodiment (the method of manufacturing a joint unit), first of all, a preparation step (S10) is performed. In this step (S10), first and second metal pipes 21 and 22 are prepared. The prepared first and second metal pipes 21 and 22 are set in the joining apparatus shown in Fig. 7. In the joining apparatus shown in Fig. 7, first metal pipe 21 is fixed to a chuck 9 connected with a positive terminal 8. Second metal pipe 22 is fixed to a chuck 9 connected with a negative terminal 6. Between two chucks 9, annular permanent magnet 7 is installed so as to surround the periphery of first and second metal pipes 21 and 22. A load cell 5 is connected to a second surface side opposite to a first surface provided with permanent magnet 7 in chuck 9 connected with negative terminal 6. On the opposite side to chuck 9 as viewed from load cell 5, a ball screw 3 is installed. A motor 1 is connected to ball screw 3 with a speed reducer 2 interposed. A displacement sensor 4 for measuring the displacement of chuck 9 connected with negative terminal 6 is disposed at a position adjacent to load cell 5. First and second metal pipes 21 and 22 are disposed such that their end faces are opposed to each other.

Next, as shown in Fig. 6, a preheating step (S20) is performed. In the step (S20), with the end faces of first and second metal pipes 21 and 22 disposed to be opposed to each other, an arc discharge is produced between the end faces, and a magnetic field is applied between the end faces to move the position of the arc discharge in between the end faces, whereby preheating is performed until the temperature at a position 2 mm away from the end faces of first and second metal pipes 21 and 22 reaches a preheating temperature (temperature T1 in Fig. 8(D)).

Specifically, at time t1 in Fig. 8, the distance (gap) between the end faces of first and second metal pipes 21 and 22 is set to a predetermined size shown by gap D1 in Fig. 8(C). At the same time, arc voltage V1 (see Fig. 8(B)) is applied between first and second metal pipes 21 and 22 to initiate an arc as shown in Fig. 3, and arc current I1 (see Fig. 8(A)) flows between the end faces. The magnetic field produced by permanent magnet 7 (see Fig. 7) allows the arc to rotate at the end faces as shown in Fig. 3. As a result, the end faces are heated, and the temperature of first and second metal pipes 21 and 22 at a position away from the end face by a predetermined distance (the position 2 mm away from the end faces) reaches temperature T1 (preheating temperature) shown in Fig. 8(D) to bring about a state in which the magnetism is reduced. At time t2 when the temperature at this position reaches temperature T1, the arc voltage and the arc current are set to zero (see Figs. 8(A), (B)). The foregoing preheating step (S20) may be performed multiple times.

Then, from time t2 to time t3, first and second metal pipes 21 and 22 are held with the arc discharge stopping. Because of this hold time, as shown in Fig. 8(D), although the temperature at the position 2 mm from the end faces is reduced to temperature T2, the temperature at the end faces becomes more uniform due to thermal diffusion at the end faces. Here, as shown in Fig. 8(C), the gap between the end faces is set to zero and set again to predetermined gap D1. This is to adjust the gap in order to ensure initiation of an arc in the main heating step described later.

Next, as shown in Fig. 6, a main heating step (S30) is performed. In the main heating step (S30), an arc discharge is produced between the end faces of first and second metal pipes 21 and 22, and a magnetic field is applied between the end faces to move the position of the arc discharge in between the end faces, whereby main heating is performed until the temperature at the position 2 mm away from the end faces of first and second metal pipes 21 and 22 reaches a joining temperature (temperature T3 in Fig. 8(D)).

Specifically, at time t3 in Fig. 8, the distance (gap) between the end faces of first and second metal pipes 21 and 22 is set to a predetermined size shown by gap D1 in Fig. 8(C). At the same time, arc voltage V1 (see Fig. 8(B)) is applied between first and second metal pipes 21 and 22 to initiate an arc as shown in Fig. 3, and arc current I2 (see Fig. 8(A)) flows between the end faces. The stability of the arc at this point of time is improved particularly at the end faces on the outer circumference side. In addition, the magnetic field produced by permanent magnet 7 (see Fig. 7) allows the arc to rotate at the end faces as shown in Fig. 3. As a result, the end faces are heated, and the temperature of first and second metal pipes 21 and 22 at a position away from the end faces by a predetermined distance (the position 2 mm away from the end faces) reaches temperature T3 (joining temperature) shown in Fig. 8(D).

After this step (S30), from time t4 when the temperature at the aforementioned position rises to temperature T3, until time t5, the step of feeding upset current (current I3 in Fig. 8(A)) between the end faces is performed, where the upset current has a value greater than the energizing current value (current I2) in the main heating step (S30) as shown in Fig. 8. As a result, as shown in Fig. 8(D), the temperature at the position 2 mm from the end faces (and the temperature of the end faces) rises. Upon time t5 in Fig. 8, the arc voltage and the upset current are set to zero. Even after time t5 when the arc voltage is set to zero in this manner, the temperature at the position 2 mm from the end faces keeps rising to reach the maximum temperature, that is, temperature T4 (see Fig. 8(D)).

Next, a joining step (S40) shown in Fig. 6 is performed. In the joining step (S40), the end faces of metal pipes 21 and 22 are butted and joined to each other after the main heating step (S30). In the joining step (S40), the joint portion where the end faces are butted and joined to each other is energized and heated.

Specifically, at a predetermined point of time after time t5 shown in Fig. 8, second metal pipe 22 is brought closer to first metal pipe 21 to reduce the distance between the end faces (the gap in Fig. 8(C)). The moving speed of second metal pipe 22 at this point of time is set to 20 mm/s or more. Then, at time t6, even after the gap becomes zero (that is, the state in which the end faces are in contact with each other), motor 1 (see Fig. 7) is further driven to press metal pipe 22 toward metal pipe 21. As a result, as shown in Fig. 8(C), the gap becomes negative (that is, the end faces are joined to each other while the fused end faces are partially pushed out toward the outer circumference side and the inner circumference side to form a bead portion). At this point of time, as shown in Fig. 8(E), a pressure is produced between the end faces at time t6 and becomes a predetermined pressure P1 at time t7. This pressure P1 (pressure welding force) is, for example, 5 MPa or more. This is because a pressure welding force of at least about 5 MPa is thought to be necessary to join the fused end faces to each other.

In this way, at the point of time when the pressure between the end faces detected by load cell 5 (see Fig. 5) becomes predetermined pressure P1, the move of metal pipe 22 by motor 1 is stopped. As a result, the gap (see Fig. 8(C)) is almost constant since time t7. Then, the state in which the pressure between the end faces is predetermined pressure P1 is held from time t7 to time t8, and, as shown in Fig. 8(A), current I4 is fed between first and second metal pipes 21 and 22 to energize and heat the joint portion. Then, at time t8, the energizing and heating is stopped. The joining step (S40) is thus performed to join first and second metal pipes 21 and 22. At the joint interface between metal pipes 21 and 22, as shown in Fig. 5, dendrite layer 15 is pushed out from the central portion of joint interface 11, so that the central portion is free from a dendrite layer.

The joining step (S40) is thus performed to join first and second metal pipes 21 and 22 and obtain a joint unit. In the method of manufacturing joint unit 10, after this joining step (S40), an after-treatment step (S50) may be performed, including the step of grinding the outer circumferential surface at the joint portion of the obtained joint unit 10 and removing the bead portion on the outer circumference side. In this way, joint unit 10 shown in Fig. 1 can be obtained.

The material of first and second metal pipes 21 and 22 is steel such as carbon steel for mechanical structures. The preheating temperature (temperature T1) in the preheating step (S20) is preferably a temperature lower than the magnetic transformation point of the aforementioned material (for example, steel). For example, the preheating temperature (temperature T1) in the preheating step (S20) may be 100°C or higher and 1000°C or lower. The reason for this is that in some thick-walled metal pipes 21 and 22, even when the temperature of the inner diameter increases, the temperature of the outer circumferential surface at the position 2 mm from the end faces of metal pipes 21 and 22 where preheating temperature T1 is measured may be not be so high. Preferably, the preheating temperature is 200°C or higher and 900°C or lower, more preferably 300°C or higher and 800°C or lower. The joining temperature (temperature T3) in the main heating step (S30) may be 1050°C or higher and 1150°C or lower (for example, 1100°C).

The energizing current value (current I1 or current I2 in Fig. 8(A)) between the end faces in the preheating step (S20) and the main heating step (S30) may be 10 A or more and 10000 A or less. The magnetic flux density of the magnetic field in the preheating step (S20) and the main heating step (S30) may be 1 mT or more and 1000 mT or less.

The moving speed (pressing speed) of metal pipe 22 in the joining step (S40) may be 20 mm/s or more and 1100 mm/s or less. The lower limit of the moving speed is set to 20 mm/s, because if the moving speed is too slow, the temperature of the end faces decreases before the end faces come into contact with each other, and the joining condition is deteriorated. The upper limit of the moving speed is set to 1100 mm/s, because this value is determined to be practical considering the performance of facility such as motor 1 and the hydraulic drive device. The moving speed is preferably 30 mm/s or more and 1000 mm/s or less, more preferably 50 mm/s or more and 900 mm/s or less.

The conditions in each step (S20 to S40) in the joining method described above can be selected appropriately according to the material, size, etc. of metal pipes 21 and 22. In the present method, since heating time control is performed using temperature history, the heating time control is easy even when current value, arc voltage value, magnetic flux density, material dimensions, and the like vary.

The characteristic configurations of the embodiment of the present invention will be itemized, although some of them overlap with the foregoing description.
(1) Joint unit 10 according to an embodiment of this invention includes first metal pipe 21, second metal pipe 22, and a joint portion (a region including joint interface 11) at which the end faces of the first and second metal pipes are joined to each other. At the joint portion, an outer circumferential bead portion protruding toward the outer circumference side and an inner circumferential bead portion 13 protruding toward the inner circumference side are formed. The difference between the width of the outer circumferential bead portion (width L1 of grinding portion 12) and the width L2 of inner circumferential bead portion 13 in the direction from first metal pipe 21 toward second metal pipe 22 is equal to or smaller than 40% with respect to the average value of the width L1 of the outer circumferential bead portion and the width L2 of inner circumferential bead portion 13. In this way, there is almost no difference in joining state between the inner circumference side and the outer circumference side of metal pipes 21 and 22 at the joint portion, and the soundness of the joint portion is ensured in the joint unit.
(2) Joint unit 10 according to an embodiment of this invention includes first metal pipe 21, second metal pipe 22, and a joint portion at which the end faces of the first and second metal pipes are joined to each other. At joint interface 11 between first metal pipe 21 and second metal pipe 22 in the joint portion, dendrite layer 15 does not exist in a region inside the outer circumferential surfaces of first and second metal pipes 21 and 22 and outside the inner circumferential surfaces of first and second metal pipes 21 and 22.
   In this way, since dendrite layer 15 with relatively low strength does not exist at the central portion of joint interface 11 in the joint unit, it is possible to reduce the possibility that the strength of the joint portion including the joint interface causes defects such as cracks at the joint portion due to the presence of dendrite layer 15. Thus, joint unit 10 having a joint portion with sufficient strength can be obtained.
(3) In joint unit 10 described above, the material of joint unit 10 may be carbon steel for mechanical structures. In this case, the joint unit according to the present embodiment can be applied to, for example, mechanical parts.
(4) In joint unit 10 described above, first and second metal pipes 21 and 22 may have an outer diameter of 10 mm or more and 250 mm or less. In this case, joint unit 10 in a range from relatively small diameters to large diameters can be obtained.
(5) In joint unit 10 described above, first and second metal pipes 21 and 22 may have a wall thickness of 1 mm or more and 16 mm or less. In this case, joint units 10 with various thicknesses can be prepared to increase the degree of freedom in selecting mechanical devices to which the joint unit according to the present embodiment 10 is applied.
   In joint unit 10 described above, at the joint portion, the outer circumferential bead portion may be removed by grinding. The width L1 of the outer circumferential bead portion may be the width L1 of the grinding portion formed by removing the outer circumferential bead portion by grinding. In this case, the outer circumferential bead portion is removed from the outer circumferential surface of joint unit 10 by grinding to make the outer circumference in a smooth finish, so that the appearance of joint unit 10 described above can be shaped like a cylinder.
(6) A magnetic rotating arc joining method according to an embodiment of this invention includes the step of preparing first and second metal pipes 21 and 22 (S10), the step of preheating (S20), the step of main heating (S30), and the step of joining (S40). In the step of preheating (S20), with the end faces of first and second metal pipes 21 and 22 disposed to be opposed to each other, an arc discharge is produced between the end faces, and a magnetic field is applied between the end faces to move the position of the arc discharge in between the end faces, whereby preheating is performed until the temperature at a position 2 mm away from the end faces of the first and second metal pipes reaches a preheating temperature (temperature T1 in Fig. 6(D)). In the step of main heating (S30), an arc discharge is produced between the end faces of first and second metal pipes 21 and 22, and a magnetic field is applied between the end faces to move the position of the arc discharge in between the end faces, whereby main heating is performed until the temperature at the position 2 mm away from the end faces of the first and second metal pipes reaches a joining temperature (temperature T3 in Fig. 6(D)). In the step of joining (S40), the end faces are butted and joined to each other after the step of main heating (S30).
   In this way, the step of preheating (S20) can be performed using the same facility as in the method used in the main heating step (S30). Therefore, it is not necessary to prepare independent heating means for preheating as in the conventional method, and preheating can be performed with a simple configuration. Thus, the joint portion (the end portions including the opposing end faces of first and second metal pipes 21 and 22) can be sufficiently heated in advance through the preheating, so that the stability of the arc discharge can be enhanced in the step of main heating (S30), and in addition, such problems as insufficient or ununiform heating of the joint portion can be suppressed. The occurrence of joint defects is thus suppressed. In the step of joining (S40), the pressure for joining the end faces to each other (pressure P1 in Fig. 6(E)) is, for example, 5 MPa or more and 950 MPa or less. The lower limit of the pressure is set to 5 MPa, because the minimum possible pressure for pressure welding is thought to be about 5 MPa. The upper limit of the pressure is set to 950 MPa, because this is the pressure estimated when a material with high yield stress is used as the material of the metal pipes. The pressure is preferably 10 MPa or more and 900 MPa or less, more preferably 20 MPa or more and 800 MPa or less.
(7) In the magnetic rotating arc joining method described above, the material of first and second metal pipes 21 and 22 may be composed of steel. The preheating temperature (temperature T1) in the step of preheating (S20) may be a temperature lower than the magnetic transformation point of the material, and the joining temperature (temperature T3) in the step of main heating (S30) may be 1050°C or higher and 1150°C or lower. The joining temperature (temperature T3) is preferably 1070°C or higher and 1130°C or lower, more preferably 1080°C or higher and 1120°C or lower.
   In this case, first and second metal pipes 21 and 22 formed of steel as the material can be reliably joined to obtain a joint unit.
(8) A magnetic rotating arc joining method according to an embodiment of this invention includes the step of preparing first and second metal pipes 21 and 22 (S10), the step of main heating (S30), and the step of joining (S40). In the step of main heating (S30), an arc discharge is produced between the end faces of first and second metal pipes 21 and 22, and a magnetic field is applied between the end faces to move the position of the arc discharge in between the end faces, whereby main heating is performed until the temperature at a position 2 mm away from the end faces of first and second metal pipes 21 and 22 reaches a joining temperature (temperature T3 in Fig. 8(D)). In the step of joining (S40), the end faces are butted and joined to each other after the step of main heating (S30). In the step of joining (S40), the relative pressure welding speed of first metal pipe 21 to second metal pipe 22 in butting the end faces to each other is 20 mm/s or more.
   In this way, dendrite layer 15, which is a layer including a dendritic structure, does not exist at the central portion of joint interface 11, and joint unit 10 having a joint portion with sufficient strength can be obtained. The lower limit of the relative pressure welding speed is set to 20 mm/s, because the relative moving speed of first metal pipe 21 and second metal pipe 22 need to be 20 mm/s or more in order to bring the fused end faces into contact with each other. For example, when the distance between the end faces is about 2 mm (the arc length is about 2 mm), the relative moving speed less than 20 mm/s makes it difficult to bring the end faces into contact with each other in the fused state. The upper limit of the relative moving speed may be 1100 mm/s or less, more preferably 1000 mm/s or less.
   The position 2 mm away from the end faces is employed as the position for measuring temperature, for the inventors have found through simulations and experiments that the temperature at this position is sufficiently reliable as the measured value for use in control since the correspondence between experiments and simulations is stable.
(9) In the magnetic rotating arc joining method described above, in the step of joining (S40), the pressure welding force (pressure P1 in Fig. 8(E)) in butting the end faces to each other may be 5 MPa or more. The upper limit of the pressure welding force may be 950 MPa or less. The lower limit of the pressure is set to 5 MPa, because the minimum possible pressure for pressure welding is thought to be about 5 MPa. The upper limit of the pressure is set to 950 MPa, because this is the pressure estimated when a material with high yield stress is used as the material of the metal pipes. The pressure is preferably 10 MPa or more and 900 MPa or less, more preferably 20 MPa or more and 800 MPa or less.
(10) In the magnetic rotating arc joining method described above, it is preferable that after the step of joining (S40), dendrite layer 15 does not exist at a region inside the outer circumferential surfaces of the first and second metal pipes 21 and 22 and outside the inner circumferential surfaces of first and second metal pipes 21 and 22 in the joint interface between first metal pipe 21 and second metal pipe 22. In this case, the strength of the joint portion in the joint unit can be sufficiently increased.
(11) The magnetic rotating arc joining method described above may further include the step of preheating (S20), after the step of preparing (S10) and before the step of main heating (S30). In the step of preheating, with the end faces of first and second metal pipes 21 and 22 disposed to be opposed to each other, an arc discharge is produced between the end faces, and a magnetic field is applied between the end faces to move the position of the arc discharge in between the end faces, whereby preheating is performed until the temperature at the position 2 mm away from the end faces of first and second metal pipes 21 and 22 reaches a preheating temperature (temperature T1 in Fig. 8(D)). In the magnetic rotating arc joining method described above, the preheating temperature (temperature T1) in the step of preheating (S20) may be a temperature lower than the magnetic transformation point of the material.
   In this way, the step of preheating (S20) can be performed using the same facility as in the method used in the main heating step (S30). Therefore, it is not necessary to prepare independent heating means for preheating, and preheating can be performed with a simple configuration. Thus, the joint portion (the end portions including the opposing end faces of first and second metal pipes 21 and 22) is sufficiently heated in advance through the preheating, so that the stability of the arc discharge can be enhanced in the step of main heating (S30), and such problems as insufficient or ununiform heating of the joint portion can be suppressed. The occurrence of joint defects thus can be suppressed.
(12) In the magnetic rotating arc joining method described above, the material of first and second metal pipes 21 and 22 may be composed of steel. The joining temperature (temperature T3) in the step of main heating (S30) may be 1050°C or higher and 1150°C or lower. The joining temperature (temperature T3) is preferably 1070°C or higher and 1130°C or lower, more preferably 1080°C or higher and 1120°C or lower. In this case, first and second metal pipes 21 and 22 formed of steel as a material can be reliably joined to obtain a joint unit.
(13) In the magnetic rotating arc joining method described above, the material may be carbon steel for mechanical structures. In this case, the magnetic rotating arc joining method described above is applied in joining of metal pipes formed of carbon steel for mechanical structures as a material, whereby the joining method according to the present embodiment can be used for, for example, manufacturing mechanical parts. Here, carbon steel for mechanical structures means carbon steel for mechanical structures (for example, S10C, S45C, S55C, and the like) defined by JIS standards G4051 and carbon steel (for example, SAE standards 10B38, SBM40, and the like) in which boron (B) is contained in the carbon steel defined by JIS standards G4051.
(14) In the magnetic rotating arc joining method described above, first and second metal pipes 21 and 22 may have an outer diameter of 10 mm or more and 250 mm or less. In this way, the joining method according to the present embodiment can be applied to metal pipes 21 and 22 in a range from relatively small diameters to large diameters.
(15) In the magnetic rotating arc joining method described above, first and second metal pipes 21 and 22 may have a wall thickness of 1 mm or more and 16 mm or less. In this way, the joining method according to the present embodiment can be applied in a range from relatively thin-walled metal pipes 21 and 22 to thick-walled metal pipes 21 and 22.

The magnetic rotating arc joining method described above may further include the step of feeding upset current (current I3 in Fig. 8(A)) between the end faces, after the step of main heating (S30) and before the step of joining (S40). The upset current has a value greater than the energizing current value in the step of main heating (S30).

In this case, before the step of joining (S40) is performed, the fused region of the joint portion (the region including the end faces of first and second metal pipes 21 and 22) can be homogenized by upset current. The occurrence of joint defects thus can be reliably suppressed.

In the magnetic rotating arc joining method described above, in the step of joining (S40), the joint portion where the end faces are butted and joined to each other may be energized and heated. In this case, excessive temperature drop at the joint portion in the step of joining (S40) can be suppressed, and therefore degradation of the joining condition can be prevented. The occurrence of joint defects thus can be suppressed more reliably.

In the magnetic rotating arc joining method described above, before the step of main heating (S30), the step of preheating (S20) may be performed multiple times. In this case, when first and second metal pipes 21 and 22 have a large diameter or metal pipes 21 and 22 are thick, the preheating multiple times can sufficiently increase the temperature of the joint portion. The occurrence of joint defects thus can be suppressed.

The magnetic rotating arc joining method described above may further include the step of holding the first and second metal pipes in a state in which the arc discharge is stopped, after the step of preheating (S20) and before the step of main heating (S30) (the period between time t2 and time t3 in Fig. 8).

In this case, particularly when first and second metal pipes 21 and 22 are thick, the step of holding as described above brings about thermal diffusion at the end faces thereby to reduce the temperature difference between the inner circumference side and the outer circumference side of the end faces. As a result, the occurrence of joint defects can be suppressed. The duration of the step of holding may, for example, exceed 0 second and be equal to or shorter than 10 seconds. This is because the hold time for about 10 seconds is ensured to sufficiently homogenize the temperature at the end faces even for thick-walled metal pipes. When metal pipes 21 and 22 are sufficiently thin, the step of holding need not be performed, and the step of main heating (S30) may be performed immediately after the step of preheating (S20).

In the magnetic rotating arc joining method described above, the energizing current value between the end faces in the step of preheating (S20) and the step of main heating (S30) may be 10 A or more and 10000 A or less. In this case, the energizing current value can be selected according to the size, material, etc. of metal pipes 21 and 22 to be joined, and the occurrence of joint defects can be suppressed. The energizing current value may be controlled so as to fall within a range of ±150 A relative to a target value.

In the magnetic rotating arc joining method described above, the magnetic flux density of the magnetic field in the step of preheating (S20) and the step of main heating (S30) may be 1 mT or more and 1000 mT or less. In this case, the magnetic flux density can be selected according to the size and material of metal pipes to be joined, the energizing conditions, and the like. The magnetic flux density is preferably 10 mT or more and 900 mT or less, more preferably 20 mT or more and 800 mT or less.
(16) A method of manufacturing a joint unit according to an embodiment of this invention uses the magnetic rotating arc joining method described above. In this way, joint unit 10 including a joint portion with sufficient strength can be obtained.

### (Experimental Example 1)

An experiment below was conducted in order to confirm the effects of the magnetic rotating arc joining method according to the present embodiment.

### <Sample>

In this experiment, cylindrical materials formed of JIS standards S45C with an outer diameter of ϕ40 mm and a wall thickness of 3 mm were used as first and second metal pipes. The axial length of each cylindrical material was 300 mm. The joining apparatus used for joining was an apparatus having the configuration shown in Fig. 7.

### <Experiment Method>

### 1) Sample in Example

The prepared metal pipes were set in the joining apparatus shown in Fig. 7 and joined by the magnetic rotating arc joining method according to the present embodiment shown in Fig. 6. The set value of the current value in the preheating step (S20) was 115A, and the magnetic flux density on the metal pipe (steel pipe) end face outer diameter side was 40 mT. The set value of the current value in the main heating step (S30) was also 115A as in the preheating step (S20). Since the current value is proportional to the rotation speed of the arc, the temperature of the metal pipes as a whole is increased by heating for a long time with a lower current value so as to expand the fused region. The magnetic flux density on the metal pipe outer diameter side was 40 mT. In the preheating step (S20), heating was conducted until the temperature at a position 2 mm from the outer diameter end faces of the metal pipes (temperature T1 in Fig. 8(D)) reached 550°C. Three seconds after the preheating step (S20) was finished (at time t3 three seconds after time t2), the main heating step (S30) was started. In this step, joining was performed when the temperature at the position 2 mm from the outer diameter end faces of the metal pipes reached 1100°C. Immediately before joining, upset current (current I3 in Fig. 8(A)) was fed with a current value of 2 kA in order to homogenize the fused region at the end faces.

The upset in the joining step (S40) was completed at a point of time when the pressure (pressure welding force) shown in Fig. 8(E) reached 60 kN (170 MPa) or when the amount of pressing (a negative value of the gap in Fig. 8(C)) reached 11 mm, with a pressure welding speed of 43 mm/s, for Example in the present invention. In order to suppress a temperature drop at the metal pipe end faces, energizing and heating with the current value 2 kA was also performed during the joining step (S40).

### 2) Sample in Comparative Example

Joining was performed basically under the same conditions as for the sample in Example. However, for the upset for the sample in Comparative Example, the conditions in Comparative Example were different from the conditions in Example. Specifically, with a pressure welding speed of 10 mm/s, the joining was completed at a point of time when the pressure (pressure welding force) shown in Fig. 8(E) reached 60 kN (or 170 MPa) or when the amount of pressing (a negative value of the gap in Fig. 8(C)) reached 10 mm.

### <Result>

### 1) Sample in Example

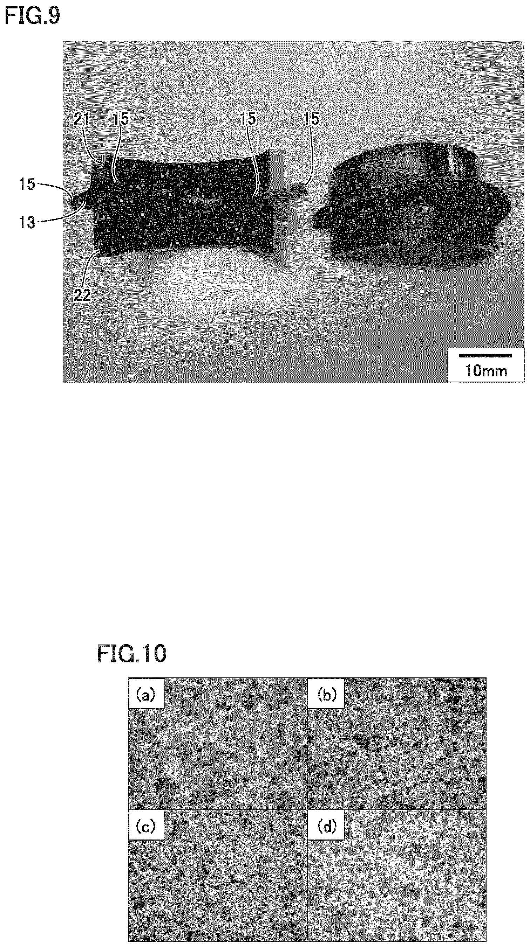

Fig. 9 shows the appearance of the joint unit in Example obtained by joining the metal pipes. In Fig. 9, the joint unit is cut along the axial direction and is arranged to expose the section of the cut half. Fig. 10 shows the cross-sectional microphotographs of the central portion of the joint portion in the joint unit shown in Fig. 9. Fig. 10 shows the cross-sectional microphotographs of (a) joint portion, (b) heat-affected zone 1, (c) heat-affected zone 2, and (d) base metal in order from the joint interface. The joint portion in Fig. 10 is a position 0 mm from the joint interface. The heat-affected zone 1 is a position 0.1 mm from the joint interface. The heat-affected zone 2 is a position 0 to 2 mm from the joint interface. The base metal is a position 0.4 mm from the joint interface.

As can be understood from Fig. 9 and Fig. 10, in the joint unit according to the present embodiment, a dendrite layer does not exist at the central portion in the joint interface of the joint portion, and the joint portion has an almost uniform structure from the inner circumference side to the outer circumference side. It can be understood that a satisfactory joint portion is formed.

### 2) Sample in Comparative Example

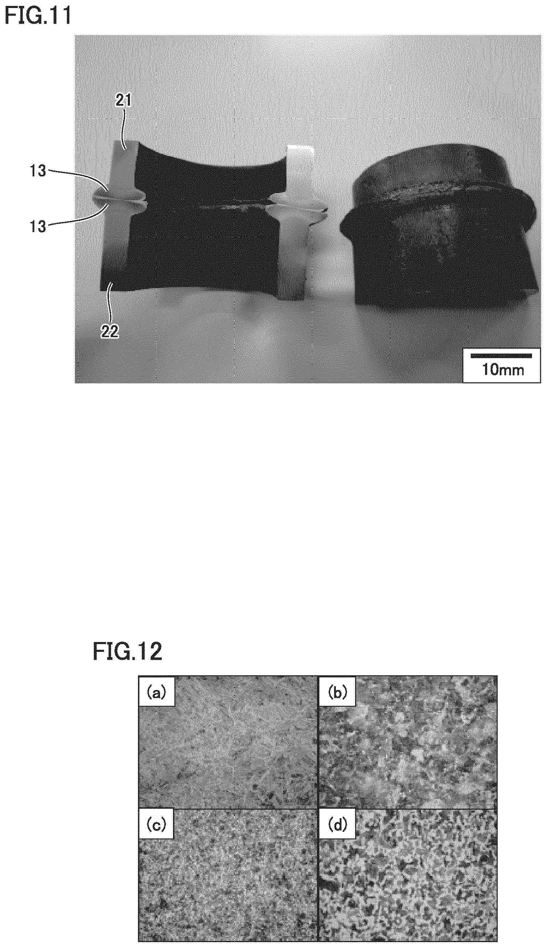

Fig. 11 shows the appearance of the joint unit in Comparative Example formed by joining the metal pipes. In Fig. 11, similarly to Fig. 9, the joint unit is cut along the axial direction and is arranged to expose the section of the cut half. Fig. 12 shows the cross-sectional microphotographs of the central portion of the joint portion in the joint unit shown in Fig. 11. Similarly to Fig. 10, Fig. 12 shows the cross-sectional microphotographs of (a) joint portion, (b) heat-affected zone 1, (c) heat-affected zone 2, and (d) base metal in order from the joint interface.

As can be understood from Fig. 11 and Fig. 12, in Comparative Example, a dendrite layer exists at the joint interface, and the strength of the joint portion is thought to be lower than the strength of the joint portion in the joint unit in Example shown in Fig. 9.

### (Experimental Example 2)

An experiment below was conducted in order to confirm the effects of the magnetic rotating arc joining method according to the present embodiment.

### <Sample>

In this experiment, cylindrical materials formed of JIS standards S45C with an outer diameter of ϕ40 mm and a wall thickness of 5 mm were prepared as first and second metal pipes. The axial length of the cylindrical material was 300 mm. The joining apparatus used for joining was an apparatus having the configuration shown in Fig. 7.

### <Experiment Method>

The prepared metal pipes were set in the joining apparatus shown in Fig. 7 and joined by the magnetic rotating arc joining method according to the present embodiment shown in Fig. 6. The set value of the current value in the preheating step (S20) was 340 A (±150 A), and the magnetic flux density on the metal pipe (steel pipe) end face outer diameter side was 40 mT. The set value of the current value in the main heating step (S30) was 270 A (±150 A). The magnetic flux density on the metal pipe outer diameter side was 40 mT. In the preheating step (S20), heating was conducted until the temperature at the position 2 mm from the outer diameter end faces of the metal pipes (temperature T1 in Fig. 8(D)) reached 550°C. Three seconds after the preheating step (S20) was finished (at time t3 three seconds after time t2), the main heating step (S30) was started. In this step, joining was performed when the temperature at the position 2 mm from the outer diameter end faces of the metal pipes reached 1100°C. Immediately before joining, in order to homogenize the fused region of the end faces, the upset current (current I3 in Fig. 8(A)) was fed with a current value of 620 A. The upset in the joining step (S40) was completed when the pressure shown in Fig. 8(E) reached 90 kN (160 MPa). In order to suppress a temperature drop at the metal pipe end faces, energizing and heating with a current value of 2 kA was also performed during the joining step (S40).

### <Result>

In the joint unit according to the present embodiment, the joint portion has an almost uniform structure from the inner circumference side to the outer circumference side, and a satisfactory joint portion is formed, in the same manner as in Experimental Example 1.

Although the embodiment and examples of the present invention have been described above, the foregoing embodiment may be modified in various manners. The scope of the present invention is not limited to the foregoing embodiment. The scope of the present invention is shown by the claims and it is intended all equivalents and modifications within the scope of the claims should be embraced here.

### INDUSTRIAL APPLICABILITY

This invention is advantageously applied particularly to magnetic rotating arc welding for steel pipes.

### REFERENCE SIGNS LIST

1 motor, 2 speed reducer, 3 ball screw, 4 displacement sensor, 5 load cell, 6 negative terminal, 7 permanent magnet, 8 positive terminal, 9 chuck, 10 joint unit, 11 joint interface, 12 grinding portion, 13 bead portion, 14a, 14b boundary point between bead and inner circumferential surface, 15 dendrite layer, 16, 18, 32, 33, 35 arrow, 17 region, 21, 22 metal pipe, 31 arc, 34 power supply.

## Claims

1. A joint unit comprising:
a first metal pipe;
a second metal pipe; and
a joint portion at which end faces of the first and second metal pipes are joined to each other, wherein
at the joint portion, an outer circumferential bead portion protruding toward an outer circumference side and an inner circumferential bead portion protruding toward an inner circumference side are formed,
a difference between a width of the outer circumferential bead portion and a width of the inner circumferential bead portion in a direction from the first metal pipe toward the second metal pipe is equal to or smaller than 40% with respect to an average value of the width of the outer circumferential bead portion and the width of the inner circumferential bead portion.

2. The joint unit according to claim 1, wherein
in the joint portion, the outer circumferential bead portion is removed by grinding, and
the width of the outer circumferential bead portion is a width of a grinding portion formed by removing the outer circumferential bead portion by grinding.

3. A joint unit comprising:
a first metal pipe;
a second metal pipe; and
a joint portion at which end faces of the first and second metal pipes are joined to each other,
wherein at a joint interface between the first metal pipe and the second metal pipe in the joint portion, a dendrite layer does not exist in a region inside outer circumferential surfaces of the first and second metal pipes and outside inner circumferential surfaces of the first and second metal pipes.

4. The joint unit according to any one of claims 1 to 3, wherein a material of the joint unit is carbon steel for mechanical structures.

5. A magnetic rotating arc joining method comprising the steps of:
preparing first and second metal pipes;
performing preheating until temperature at a position 2 mm away from end faces of the first and second metal pipes reaches a preheating temperature, by producing an arc discharge between the end faces of the first and second metal pipes in a state in which the end faces are disposed to be opposed to each other and applying a magnetic field between the end faces to move a position of the arc discharge in between the end faces;
performing main heating until temperature at the position 2 mm away from the end faces of the first and second metal pipes reaches a joining temperature, by producing an arc discharge between the end faces of the first and second metal pipes and applying a magnetic field between the end faces to move a position of the arc discharge in between the end faces; and
a step of joining the end faces by butting the end faces to each other after the step of main heating.

6. The magnetic rotating arc joining method according to claim 5, further comprising the step of feeding upset current between the end faces, after the step of main heating and before the step of joining, the upset current having a value greater than an energizing current value in the step of main heating.

7. The magnetic rotating arc joining method according to claim 5 or 6, wherein in the step of joining, a joint portion at which the end faces are butted and joined to each other is energized and heated.

8. A magnetic rotating arc joining method comprising the steps of:
preparing first and second metal pipes;
performing main heating until temperature at a position 2 mm away from the end faces of the first and second metal pipes reaches a joining temperature, by producing an arc discharge between the end faces of the first and second metal pipes and applying a magnetic field between the end faces to move a position of the arc discharge in between the end faces; and
joining the end faces by butting the end faces each other, after the step of main heating,
wherein in the step of joining, a relative pressure welding speed of the first metal pipe to the second metal pipe in butting the end faces to each other is 20 mm/s or more.

9. The magnetic rotating arc joining method according to claim 8, wherein in the step of joining, a pressure welding force in butting the end faces to each other is 5 MPa or more.

10. The magnetic rotating arc joining method according to claim 8 or 9, wherein after the step of joining, a dendrite layer does not exist in a region inside outer circumferential surfaces of the first and second metal pipes and outside inner circumferential surfaces of the first and second metal pipes in a joint interface between the first metal pipe and the second metal pipe.

11. The magnetic rotating arc joining method according to any one of claims 8 to 10, further comprising the step of, after the step of preparing and before the step of main heating, performing preheating until temperature at the position 2 mm away from the end faces of the first and second metal pipes reaches a preheating temperature, by producing an arc discharge between the end faces of the first and second metal pipes in a state in which the end faces are disposed to be opposed to each other and applying a magnetic field between the end faces to move a position of the arc discharge in between the end faces.

12. A method of manufacturing a joint unit, using the magnetic rotating arc joining method of any one of claims 5 to 11.
